# EUROPÄISCHE PATENTANMELDUNG

(11) **EP 1 190 967 A2**
(43) Veröffentlichungstag der Anmeldung: **27.03.2002**
(21) Anmeldenummer: 01122038.1
(22) Anmeldetag: 13.09.2001
(51) Int. Cl.: B65G 35/00

(54) **Fördervorrichtung**

(30) Priorität: 22.09.2000 DE 10047140
(71) Anmelder: Rösler Oberflächentechnik GmbH & Co. KG, 96231 Staffelstein (DE)
(72) Erfinder: Möller, Frank, 96231 Staffelstein (DE)
(74) Vertreter: Manitz, Finsterwald & Partner GbR

(57) **Zusammenfassung**

Eine Vorrichtung Fördern von Werkstücken umfaßt ein antreibbares Muldenband mit zueinander parallelen Muldenstäben, deren Enden gelenkig an umlaufenden Führungsmitteln befestigt sind. Die Führungsmittel laufen in zueinander parallelen Ebenen um, die geneigt sind.

## Beschreibung

Die vorliegende Erfindung betrifft eine Vorrichtung zum geradlinigen Fördern von Werkstücken, umfassend ein antreibbares endloses Muldenband, das eine Vielzahl von zueinander parallelen, stabartigen Elementen aufweist, deren Enden jeweils gelenkig an umlaufenden Führungsmitteln befestigt sind, die jeweils in zueinander parallelen Ebenen umlaufen.

Eine derartige Vorrichtung ist aus der EP 0 609 661 B1 bekannt. Bei dieser bekannten Vorrichtung sind die zueinander parallelen Ebenen, in welchen die Führungsmittel für die Stabenden umlaufen, grundsätzlich derart gegenüber der Förderrichtung geneigt, daß die horizontale Schnittgerade einer Ebene und die Förderrichtung einen Winkel einschließen, der ungleich 90° ist. Um eine in Förderrichtung größere Fördergeschwindigkeit zu erzielen, können zusätzlich diese Ebenen gegenüber der Horizontalen geneigt werden.

Eine weitere Vorrichtung zum geradlinigen Fördern von Werkstücken ist aus der EP 0 205 738 bekannt. Bei dieser Vorrichtung, die in ähnlicher Weise wie die eingangs beschriebenen Muldenbandförderer aufgebaut ist, sind die parallelen Ebenen, an denen die Enden der stabartigen Elemente befestigt sind, ausschließlich derart gegenüber der Förderrichtung geneigt, daß die horizontale Schnittgerade einer Ebene und die Förderrichtung einen Winkel einschließen, der ungleich 90° ist.

Es ist die Aufgabe der vorliegenden Erfindung, eine Vorrichtung der eingangs genannten Art derart weiterzubilden, daß diese bei vereinfachter Herstellung eine verbesserte Förderwirkung aufweist.

Die Lösung dieser Aufgabe erfolgt durch die Merkmale des Anspruchs 1 und insbesondere dadurch, daß bei einer Vorrichtung der eingangs genannten Art die Ebenen, in der die Führungsmittel umlaufen, zwar gegenüber der Horizontalen um einen Winkel geneigt sind, daß jedoch die horizontalen Schnittgeraden dieser Ebenen mit der Förderrichtung jeweils einen rechten Winkel bilden. Mit anderen Worten bedeutet dies, daß die zueinander parallelen Ebenen, gesehen in einer horizontalen Schnittebene, nicht gegenüber der Förderrichtung verkippt sind, jedoch gegenüber der Horizontalen um einen Winkel geneigt sind.

Im Gegensatz zum Stand der Technik, der ein Verkippen der zueinander parallelen Ebenen relativ zur Förderrichtung, gesehen in einer horizontalen Schnittebene, als unumgänglich ansieht, hat sich überraschenderweise herausgestellt, daß auf dieses Verkippen relativ zur Förderrichtung völlig verzichtet werden kann, wenn die Ebenen stattdessen ausschließlich relativ zur Horizontalen geneigt werden. Hierdurch ist es einerseits möglich, die gesamte Vorrichtung kostengünstiger herzustellen, da lediglich eine Verkippung um eine Achse vorgesehen sein muß. Andererseits hat sich herausgestellt, daß mit der erfindungsgemäßen Vorrichtung eine verbesserte Förderwirkung erzielt wird, was dadurch zu erklären ist, daß bei einer Verkippung der zueinander parallelen Ebenen gegenüber der Horizontalen in einer Vertikalebene die größte Förderwirkung erzielt wird, d.h. derjenige Abschnitt des Muldenbandes, der die größte Förderwirkung ausübt, ist der weitgehend vertikal verlaufende Abschnitt des Muldenbandes. Die durch das Muldenband geförderten Werkstücke halten sich jedoch die meiste Zeit nicht am Grund der Mulde sondern gerade in diesem annähernd vertikal verlaufenden Abschnitt des Muldenbandes auf, der erfindungsgemäß die größte Förderwirkung erzielt. Somit ist es möglich, eine hervorragende Förderwirkung auch von großen oder sperrigen Werkstücken zu erzielen, obwohl eine Verkippung der zueinander parallelen Ebenen relativ zur Förderrichtung nicht vorgesehen ist.

Vorteilhafte Ausführungsformen der Erfindung sind der Beschreibung, den Zeichnungen sowie den Unteransprüchen beschrieben.

Nach einer ersten vorteilhaften Ausführungsform können die Enden der stabartigen Elemente in den umlaufenden Führungsmitteln innerhalb eines vorgegebenen Winkelbereiches nach Art eines Universalgelenkes um beliebige Schwenkachsen verschwenkbar sein. Eine solche Lagerung der stabartigen Elemente ist aus dem Stand der Technik grundsätzlich bekannt (vgl. beispielsweise die eingangs bereits erwähnte EP 0 205 738 B1) und hat sich bei gattungsgemäßen Fördervorrichtung bewährt. Die beschriebene Lagerung kann beispielsweise dadurch erreicht werden, daß die Stabenden in den umlaufenden Führungsmitteln in einem Loslager gelagert sind, so daß die allseitige Bewegungsfreiheit der Stäbe durch das vorgesehene Spiel gewährleistet ist.

Nach einer weiteren vorteilhaften Ausführungsform verlaufen die stabartigen Elemente parallel zur Horizontalen, d.h. die durch das Muldenband gebildete Mulde muß gegenüber der Horizontalen nicht schräggestellt werden.

Die stabartigen Elemente können zusätzlich mit Mitnehmern versehen sein, um die Mitnahme von Werkstücken zusätzlich zu fördern.

Nachfolgend wird die vorliegende Erfindung rein beispielhaft anhand einer vorteilhaften Ausführungsform und unter Bezugnahme auf die beigefügten Zeichnungen beschrieben. Es zeigen:
- Fig. 1: eine perspektivische Ansicht einer Vorrichtung zum geradlinigen Fördern von Werkstücken gemäß der Erfindung; und
- Fig. 2: eine Seitenansicht auf einen Teil der Vorrichtung von Fig. 1.

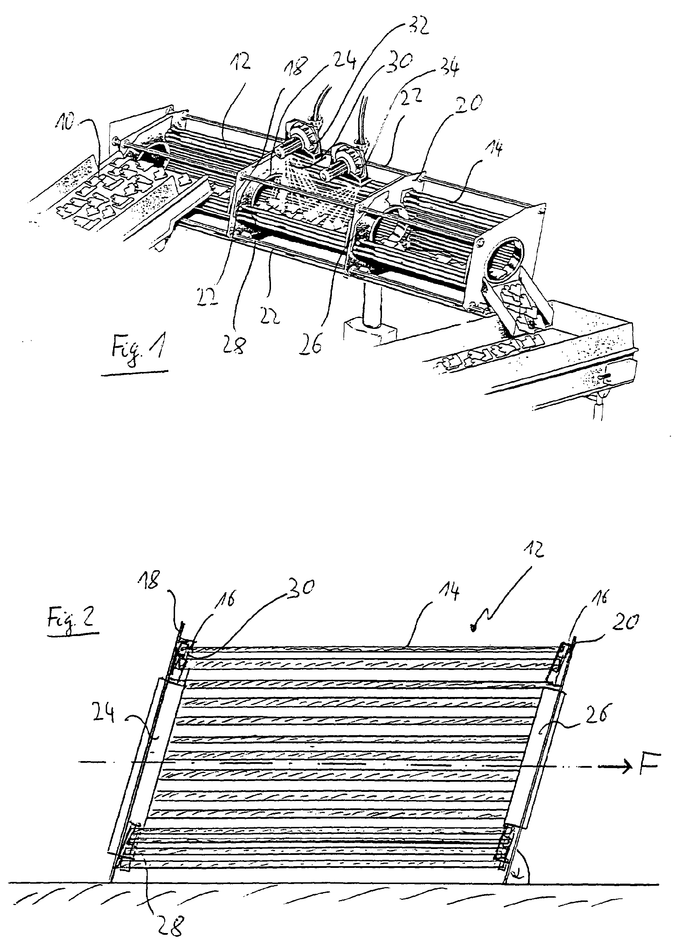

Fig. 1 zeigt eine Vorrichtung zum geradlinigen Fördern von Werkstücken 10, die ein über einen nicht dargestellten Antrieb antreibbares Muldenband 12 aufweist, das eine Vielzahl von zueinander parallelen, stabartigen Elementen 14 aufweist, deren Enden jeweils gelenkig an umlaufenden Führungsmitteln 16 (Fig. 2) befestigt sind. Die umlaufenden Führungsmittel 16 können beispielsweise durch endlose Riemen gebildet sein, auf denen Lager für die Stabenden vorgesehen sind. Die Führungsmittel 16 laufen in jeweils zueinander parallelen Ebenen um, die bei dem dargestellten Ausführungsbeispiel parallel zu Endplatten 18, 20 verlaufen. Die Endplatten 18, 20 sind miteinander über Verbindungsstangen 22 (in Fig. 2 nicht dargestellt) verbunden und an den Endplatten 18, 20 sind Führungsringe 24, 26 sowie Umlenkrollen 28, 30 vorgesehen. Mit Hilfe der Umlenkrollen 28 und 30 wird das Muldenband so um die Führungsringe 24, 26 geführt, daß sich die in Fig. 1 dargestellte, nach oben und zur Seite hin offene Mulde ergibt, in der die Werkstücke gefördert werden.

Wie insbesondere Fig. 2 zeigt, sind die Ebenen, in denen die Führungsmittel 16 umlaufen, d.h. die Endplatten 18 und 20 gegenüber der Horizontalen um einen Winkel α geneigt. Jedoch bilden die horizontalen Schnittgeraden der Endplatten 18, 20 mit der Förderrichtung F jeweils einen rechten Winkel, d.h. die Endplatten 18, 20 sind in einer Horizontalebene gesehen nicht gegenüber der Förderrichtung F verkippt.

Im Betrieb der in Fig. 1 dargestellten Fördervorrichtung werden die Werkstücke 10 durch den dargestellten Zuführförderer zunächst in das Innere der durch das Muldenband 12 gebildeten Mulde gefördert. Durch die dargestellte beschriebene Fördervorrichtung erfolgt anschließend ein geradliniges Fördern der Werkstücke 10 durch einen Strahlabschnitt, in dem die Werkstücke mit Hilfe von Schleuderrädern 32, 34 mit Strahlmittel behandelt werden. Nach dieser Behandlung treten die Werkstücke über eine Rutsche aus der Fördervorrichtung aus und werden von einem abgehenden Förderer abtransportiert. Der Transport innerhalb des Muldenbandförderers erfolgt dadurch, daß sich das endlos umlaufende Muldenband kontinuierlich dreht und dabei die einzelnen Werkstücke in Förderrichtung F mitnimmt. Die Mitnahme erfolgt dadurch, daß die Werkstücke zunächst bei sich drehendem Muldenband vom Grund der Mulde seitlich nach oben steigen, wobei bei dieser Bewegung ein Transport in Förderrichtung F erfolgt, da auch die einzelnen Stäbe 14 des Muldenbandes 12 eine Relativbewegung in Förderrichtung F durchführen (vgl. Fig. 2). Wie Fig. 2 verdeutlicht, wird dabei die größte Förderwirkung in einer Vertikalebene erzielt. Nachdem die Werkstücke seitlich an der Wand des Muldenbandes hochgefördert wurden, fallen diese zu einem bestimmten Zeitpunkt wieder auf den Grund der Mulde zurück, wodurch ein neuerlicher Förderzyklus eingeleitet wird.

Bei dem erfindungsgemäßen Muldenbandförderer wird die Tatsache ausgenutzt, daß sich die Werkstücke überwiegend nicht im Bereich des Muldengrundes sondern im Bereich der seitlichen Muldenwand befinden. Gerade dieser Bereich des Muldenbandes besitzt jedoch aufgrund der erfindungsgemäßen Schrägstellung die größte Förderwirkung, so daß auf eine zusätzliche Schrägstellung der Mulde quer zur Förderrichtung völlig verzichtet werden kann.

### Bezugszeichenliste

- 10: Werkstücke
- 12: Muldenband
- 14: stabartiges Element (Muldenstab)
- 16: umlaufendes Führungsmittel
- 18, 20: Endplatte
- 22: Verbindungsstange
- 24, 26: Führungsring
- 28, 30: Umlenkrolle
- 32, 34: Schleuderrad
- α: Kippwinkel
- F: Förderrichtung

## Patentansprüche

1. Vorrichtung zum geradlinigen Fördern von Werkstücken (10), umfassend ein antreibbares, endloses Muldenband (12), das eine Vielzahl von zueinander parallelen, stabartigen Elementen (14) aufweist, deren Enden jeweils gelenkig an umlaufenden Führungsmitteln (16) befestigt sind, die jeweils in zueinander parallelen Ebenen umlaufen,
**dadurch gekennzeichnet, daß**
die Ebenen (18, 20), in denen die Führungsmittel (16) umlaufen, zwar gegenüber der Horizontalen um einen Winkel (α) geneigt sind, daß jedoch die horizontalen Schnittgeraden dieser Ebenen (18, 20) mit der Förderrichtung (F) jeweils einen rechten Winkel bilden.

2. Vorrichtung nach Anspruch 1,
**dadurch gekennzeichnet, daß**
die Enden der stabartigen Elemente (14) in den umlaufenden Führungsmitteln (16) innerhalb eines vorgegebenen Winkelbereiches nach Art eines Universalgelenkes um beliebige Schwenkachsen verschwenkbar sind.

3. Vorrichtung nach Anspruch 2,
**dadurch gekennzeichnet, daß**
die Enden der stabartigen Elemente (14) in den umlaufenden Führungsmitteln (16) in einem Loslager gelagert sind.

4. Vorrichtung nach Anspruch 1,
**dadurch gekennzeichnet, daß**
die stabartigen Elemente (14) parallel zur Horizontalen verlaufen.

5. Vorrichtung nach Anspruch 1,
**dadurch gekennzeichnet, daß**
die stabartigen Elemente mit Mitnehmern versehen sind.
